# EUROPÄISCHE PATENTANMELDUNG

(11) **EP 1 337 030 A2**
(43) Veröffentlichungstag der Anmeldung: **20.08.2003**
(21) Anmeldenummer: 03000904.7
(22) Anmeldetag: 16.01.2003
(51) Int. Cl.: H02M 1/08

(54) **Ansteuerung für Stromrichterventile**

(30) Priorität: 13.02.2002 DE 10205832
(71) Anmelder: Semikron Elektronik GmbH, Patentabtelung, 90253 Nürnberg (DE)
(72) Erfinder: Bode, Rüdiger, 91325 Adelsdorf/Neuhaus (DE); Katzenberger, Günter, 97084 Würzburg (DE)

(57) **Zusammenfassung**

Die Erfindung betrifft eine Ansteuerung für Stromrichterventile (37) bzw. hieraus aufgebauter Stromrichter (36) bestehend aus einer Anfordereinheit (10), bestehend mindestens aus einer digitalen Recheneinheit (11) und einer damit verbundenen digitalen Schnittstelle (14) samt deren Ansteuerung (15). Weiterhin besteht die Ansteuerung aus einer digitalen Datenübertragung (z.B. IEEE 1394) (22) und einer Ansteuereinheit (30), die ihrerseits mindestens aus einer digitalen Schnittstelle (32) samt Ansteuerung (33), einer digitalen Recheneinheit (34), sowie analogen Komponenten (35) zur direkten Ansteuerung der Stromrichterventile (37) besteht.

## Beschreibung

Die Erfindung betrifft eine Ansteuerung für Stromrichterventile, wie sie beispielsweise in den verschiedenen Klassen von Stromrichtem eingesetzt werden . Derartige Ansteuerungen sind beispielhaft aus U. Nicolai et al., "Applikationshandbuch IGBT- und MOSFET-Leistungsmodule", ISBN 3-932633-24-5, Seite 192 bis 196 bekannt.

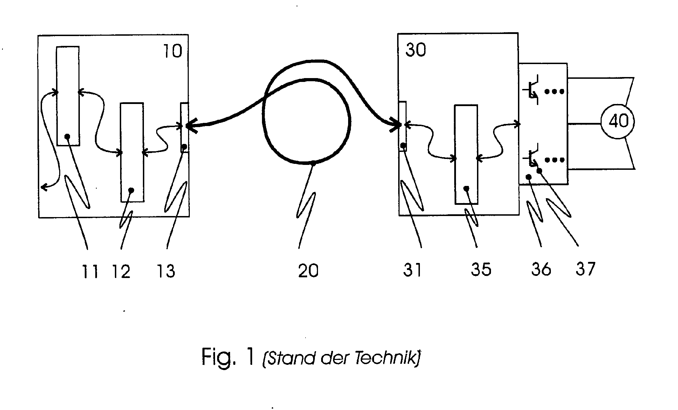

Nach dem Stand der Technik (vgl. Fig. 1) bestehen Ansteuerungen für Stromrichterventile aus einer anwendungsspezifischen Anfordereinheit und einer systemspezifischen Ansteuereinheit des Leistungshalbleitermoduls.

Anwendungsspezifisch meint hier individuell passend zum Einsatzgebiet der Stromrichterventile bzw. des Stromrichters; systemspezifisch meint individuell passend zum oder Bestandteil des Stromrichterventile bzw. daraus aufgebauter Einheiten wie beispielsweise Stromrichter in Form Leistungshalbleitermodulen.

Die Ansteuereinheit weist in der Regel gewisse Schutzfunktionen, wie z.B. eine Kurzimpulsunterdrückung und / oder eine Kurzschlusserkennung auf. Des weiteren hat sie die Aufgabe die von der Anfordereinheit erzeugten analogen Steuersignale an die Treiber der Stromrichterventile weiterzugeben. Die Ansteuereinheit meldet Fehler und / oder einzelne Messwerte, wie Temperatur oder abgegebener Strom ebenfalls als analoge Signale an die Anfordereinheit.

Die anwendungsspezifische Anfordereinheit erzeugt die systemspezifischen analogen Schaltsignale, d.h. Schaltsignale zum Zeitpunkt und für die Dauer zu denen die Stromrichterventile eingeschaltet sein sollen. Diese werden als kontinuierliches analoges Signal an die Ansteuereinheit weitergeleitet. Die Anfordereinheit steuert somit mittels seiner erzeugten Analogsignale direkt die Stromrichterventile an.

Fig. 1 zeigt ein Ausführungsbeispiel einer Ansteuerung für einen u.a. mittels Stromrichterventilen aufgebauten Stromrichter nach dem Stand der Technik. Derartige Stromrichter bestehen nach dem Stand der Technik aus einem oder mehreren Leistungshalbleitermodulen. Es handelt sich hier um die Ansteuerung eines 3 Phasen Stromrichters zum Betrieb eines Motors (40). Die Anfordereinheit (10), bestehend aus einer digitalen Recheneinheit (11), einer nachgeschalteten analogen Signalverarbeitung bzw. - erzeugung (12), erzeugt die Steuersignale für die 3 TOP- und die 3 BOT- Schalter des Stromrichters (36). Diese Signale werden als 0/15V Analogwerte an der Schnittstelle (13) der Anfordereinheit (10) als Ausgangssignal angelegt. Die angelegten Signale führen unmittelbar zum Schalten der entsprechenden Stromrichterventile (37) des Stromrichters (36). Hierbei muss das Ansteuersignal eines jeden der 6 Stromrichterventile an einem Kontakt der Schnittstelle (13) angelegt werden, da das jeweils anzusteuemde Stromrichterventil so lange eingeschaltet bleibt wie das entsprechende Signal anliegt.

Die Schnittstelle (13) der Anfordereinheit (10) weist auch mindestens ein Eingangssignal auf. Stand der Technik sind beispielhaft folgende analog dargestellte Eingangssignale:
- Temperaturüberwachung der Stromrichterventile
- Überstromüberwachung der Stromrichterventile
- Abgegebener Strom der jeweiligen Halbbrücke
- Spannung des Zwischenkreises

Es ist auf Grund der möglicherweise gestörten Datenübertragung (siehe unten) nicht sicher gestellt, dass alle Eingangssignale in der Anfordereinheit korrekt ausgewertet und in entsprechend geänderte Ansteuerimpulse umgesetzt werden können.

Weiterhin nachteilig am Stand der Technik ist, dass die Anfordereinheit systemspezifische Signale erzeugen muss und dass daher bei einer Änderung des Stromrichters, z.B. bei einer neue Generation derselben, auch die Anfordereinheit an die neuen systemspezifischen Ansteuersignale angepasst werden muss. Auch die mögliche neue Ausgestaltung der in der Anfordereinheit eingehenden Signale erfordert ein Anpassung der anwendungsspezifischen Anfordereinheit an diese systemspezifischen Signale.

Die Ansteuereinheit (30) weist ihrerseits eine analoge Schnittstelle (31) zur Kommunikation mit der Anfordereinheit (10) auf. Diese Schnittstelle empfängt die analogen Ansteuersignale der Anfordereinheit und sendet kontinuierlich die bereits oben erwähnten Signale, wie Temperaturüberwachung der Stromrichterventile, Überstromüberwachung der Stromrichterventile, abgegebener Strom der jeweiligen Halbbrücke und / oder Spannung des Zwischenkreises. Hierzu weist die Ansteuereinheit (30) bzw. der Stromrichter (36) verschiedene Sensoren auf. Basierend auf diesen Sensorwerten beinhaltet die Ansteuereinheit auch interne Schutzfunktionen für die Stromrichterventile, wodurch der Stromrichter beispielsweise durch Abschalten vor Zerstörung geschützt werden kann. Für die internen Schutzfunktionen können als Basisdaten ausschließlich die eigenen Sensorwerte sowie die momentan von der Anfordereinheit anliegenden Ansteuersignale ausgewertet werden. Eine vorausschauende Schutzfunktion ist aufgrund der fehlenden Werte für die zukünftige Ansteuerung der Stromrichterventile nur sehr eingeschränkt möglich.

Da jede anwendungsspezifische Anfordereinheit (10) eigene Ansteuerimpulse erzeugt, kann die systemspezifische Ansteuerung (30) prinzipielle oder systematische Fehlansteuerungen der Anfordereinheit ebenfalls nicht oder nicht immer erkennen, da wie erwähnt jeweils nur ein Momentanwert zur Verfügung steht und keine Vorhersage auf zukünftige Ansteuerimpulse möglich ist. Daher kann der Stromrichter nicht vollständig durch die systemspezifische Steuerung vor Fehlfunktionen der anwendungsspezifischen Anfordereinheit geschützt werden. Es ist ebenfalls nicht sichergestellt, dass alle Fehlermeldungen an die anwendungsspezifische Anfordereinheit (10) von diesem korrekt ausgewertet und in entsprechend geänderte Ansteuerimpulse umgesetzt wurden.

Weiterhin können eingestrahlte Störungen (siehe unten) als Signal erkannt werden oder übertragene mit eingestrahlten Störungen behaftete Signale nicht als solche erkannt werden. Diese Fälle bergen die Gefahr einer unerwünschten Beschaltung des Stromrichters und damit das Risiko dessen Störung oder Ausfall zu verursachen.

Nach dem Stand der Technik werden alle Signale zwischen der Anfordereinheit und der Ansteuereinheit als kontinuierliche Analogwerte über ein konventionelles mehradriges Kabel (20) ausgestaltet als Punkt zu Punkt Verbindung übertragen. Hierbei ist für das Ansteuersignal eines jeden Stromrichterventils eine eigene Ader, insgesamt also sechs, notwendig, da das Ansteuersignal so lange anliegen muss wie der Stromrichterventile eingeschaltet sein soll. Weitere Adern des Kabel (20) sind für die Temperaturüberwachung der Stromrichterventile, die Überstromüberwachung der Stromrichterventile, den abgegebenen Strom der jeweiligen 3-phasigenHalbbrücke (3 Adern) sowie die Spannung des Zwischenkreises notwendig. Das Übertragungskabel weist somit aus einer Vielzahl von Adern auf, um alle gewünschten analogen Signale übertragen zu können.

Technologisch sinnvoll sind derartige Übertragungsleitungen (20) nur bei kurzen Distanzen in der Größenordnung eines Meters. Bei zunehmender Länge ergeben sich die bekannten Nachteile analoger Signalübertragung. Speziell bei Einsatz der Stromrichter (36) bei rauen Umgebungsbedingungen, wie zum Beispiel in Windkraftanlagen, erweist sich dies als besonders unvorteilhaft.

Weiterhin nachteilig an der analogen Übertragung (20) ist die fehlende Störsicherheit der Signale. Es können durch eingestrahlte Störungen Signale nicht als solche erkannt werden, oder die Störung selbst kann als Signale erkannt werden. Diese Fälle bergen die Gefahr einer unerwünschten Beschaltung des Stromrichters und damit das Risiko dessen Störung oder Ausfall zu verursachen. Die analoge Übertragung ermöglicht ebenso wenig eine Detektion oder gar Korrektur von Übertragungsfehlem.

Zusammenfassend ergeben die Nachteile des Standes der Technik eine prinzipbedingte Einschränkung der Funktionssicherheit und damit der Verfügbarkeit des Stromrichters.

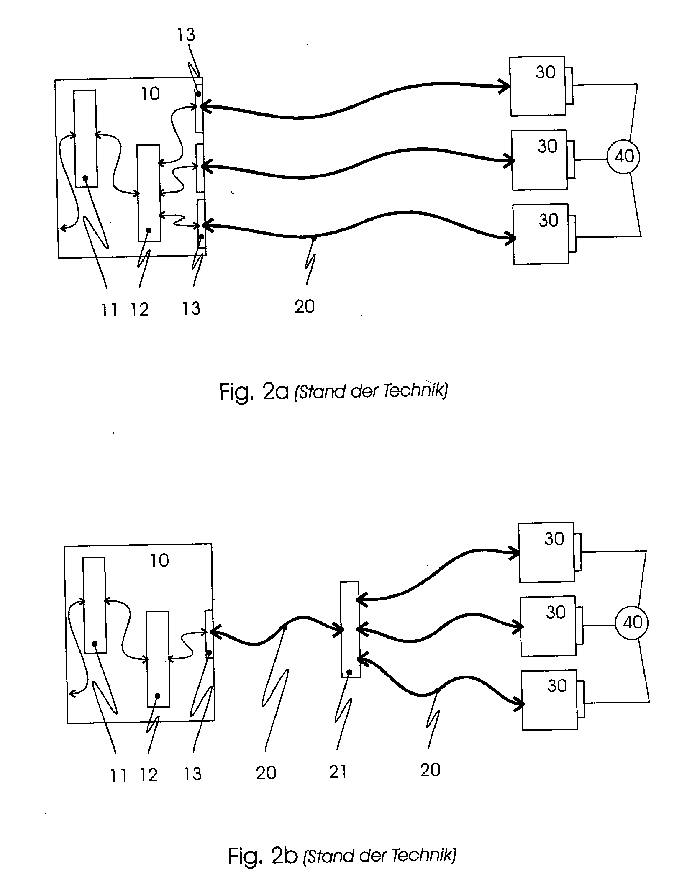

Fig. 2 zeigt als weiteres Ausführungsbeispiel nach dem Stand der Technik die Ansteuerung mehrerer Stromrichter (36). Hierzu ist eine Anpassung der Anfordereinheit (10) durch eine schaltungstechnische Erweiterung um die für die weiteren Stromrichter notwendige Anzahl von Schnittstellen (13) notwendig (Fig. 2a). Alternativ können wie in Fig. 2b gezeigt Adapter (21) vorgesehen werden, die die Ansteuersignale an die jeweilige Ansteuereinheit (30) der Stromrichter (36) und nur an diesen weiterleiten. Hierzu ist ebenfalls eine schaltungstechnische Anpassung der Anfordereinheit (10) im Vergleich zur Ansteuerung nur eines Stromrichters erforderlich. Diese als Skalierbarkeit bezeichnete Möglichkeit der Ausweitung der Ansteuerung auf mehrere Stromrichter ist nach dem Stand der Technik nur aufwändig möglich. Als Hauptnachteil ist die Erfordernis weiterer analoger Ansteuerleitungen mit oben genannten Nachteilen zu sehen.

Der vorliegenden Erfindung liegt die Aufgabe zugrunde eine Ansteuerung für Stromrichterventile oder daraus aufgebaute Stromrichter vorzustellen, die störsicher und Fehler erkennend ausgebildet ist, eine gegenüber dem Stand der Technik weniger aufwändig gestaltete Anfordereinheit benötigt und skalierbar ist.

Die Aufgabe wird gelöst durch die Maßnahmen des Anspruchs 1. Weitere vorteilhafte Ausgestaltungen sind in den Unteransprüchen genannt.

Der Grundgedanke der Erfindung liegt darin, dass die Anfordereinheit lediglich die Parameter zur Steuerung des oder der Stromrichterventile als digitale Werte an die Ansteuereinheit übergibt, erst dort die entsprechenden analogen Signale zur Ansteuerung des oder der Stromrichterventile erzeugen werden und die Übertragung dieser Parameter ist mittels einer geeigneten digitalen, störsicher und fehlererkennend Datenübertragung ausgeführt.

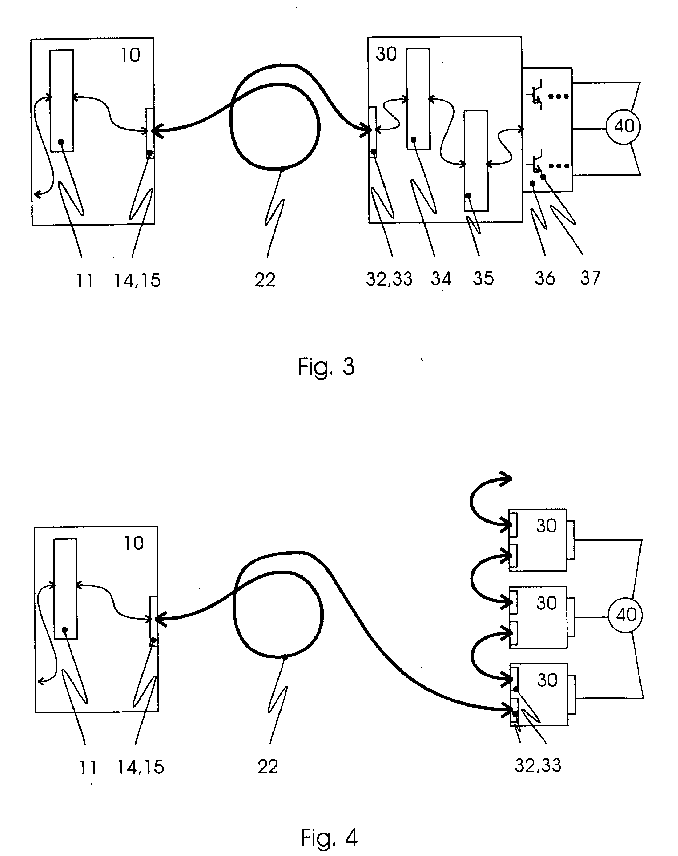

Die erfinderische Lösung wird an Hand der Fig. 3 und 4 weiter erläutert. Hierbei wird beispielhaft die Ansteuerung eines 3 Phasen Motors gezeigt.

Fig. 3 zeigt die Ansteuerung eines 3 Phasen Stromrichter zur Ansteuerung eines Motors (40) mit einer Anfordereinheit (10) bestehend aus den für die Ansteuerung der Stromrichterventile (37) mindestens notwendigen Komponenten, einer digitalen Recheneinheit (11) und einer damit verbundenen digitalen Schnittstelle (14) samt deren Ansteuerung (15). Die Anfordereinheit (10) selbst weist keinerlei analoge Signalverarbeitung zur Ansteuerung der Stromrichterventile (37) bzw. des Stromrichters (36) auf. Die digitale Recheneinheit (11) erhält von der Ansteuereinheit (30) ausschließlich normierte digitale Signale über die digitale Schnittstelle (14) zum Stromrichter bzw. zu dessen Ansteuereinheit (30). Aus diesen Eingangssignalen sowie anwendungsspezifischen Daten werden digitale Ausgangssignale erzeugt, die über die digitale Schnittstelle (14) der Ansteuereinheit (30) auf Anforderung durch diese zugeführt werden. Die mittels dieser Signale zugeführten Daten enthalten lediglich die Parameter der Ansteuerung der Stromrichterventile in normierter digitaler Form.

Die Anfordereinheit (10) ihrerseits erhält ebenfalls in normierter digitaler Form alle benötigten Betriebsparameter des Stromrichters (36), um die für die gewünschte Betriebsart notwendigen Ausgangssignale zu erzeugen.

Durch die normierte digitale Form des Datenaustausches benötigt die anwendungsspezifische Anfordereinheit (10) keinerlei systemspezifische Informationen über interne Parameter der Ansteuerung des Stromrichters (36).

Die erfinderische Ansteuereinheit (30) besteht aus mindestens einer digitalen Schnittstelle (32) samt deren Ansteuerung (33), einer digitalen Recheneinheit (34) sowie den analogen Komponenten (35) zur direkten Ansteuerung der Stromrichterventile (37) bzw. des Stromrichters (36). Die digitale Recheneinheit (34) erhält als digitale Eingangssignal von der Anfordereinheit (10) die Parameter zur Ansteuerung des Stromrichters (36). Sie wertet weiterhin die Sensorwerte der Betriebsparameter des Stromrichters aus. Aus beiden Datenströmen erzeugt die Recheneinheit (34) die Ansteuersignale für die analogen Treiber (35) der Stromrichterventile (37). Somit liegt die vollständige Kontrolle des Stromrichters (36) bei der systemspezifischen Komponente Ansteuereinheit (30) und nicht wie beim Stand der Technik verteilt auf Ansteuereinheit (30) und Anfordereinheit (10). Unter vollständiger Kontrolle soll hier verstanden werden, dass die Ansteuereinheit die von der Anfordereinheit gewünschte Ansteuerung der Stromrichterventile ausführt, falls keine Parameter, wie beispielsweise die Temperatur der Stromrichterventile, gegen eine derartig Ansteuerung sprechen. In diesem Fall wird die Ansteuereinheit eine geeignet veränderte Ansteuerung durchführen.

Die erfinderische Ansteuereinheit (30) weist somit eine Reihe von Vorteilen gegenüber dem Stand der Technik auf. Die Zuverlässigkeit bzw. Verfügbarkeit des Stromrichters wird erhöht, da kritische Betriebszustände sicher erkannt werden können und die systemspezifische Ansteuerung entsprechende Korrekturmaßnahmen durchführen kann ohne durch Signale der anwendungsspezifischen Anfordereinheit mittels unvorhersehbarer Anforderungen gestört zu werden.

Kritische Betriebszustände können gespeichert werden und stehen somit zu einer nachträglichen Auswertung zur Verfügung.

Aufgrund der Ausgestaltung der Datenübertragung (siehe unten) werden Übertragungsfehler entweder korrigiert oder zumindest erkannt und können nicht zu unvorhergesehen Schaltzuständen des Stromrichters und damit zu dessen Ausfall führen.

Die Datenübertragung erfolgt seriell mittels des Standards IEEE 1394, der sowohl elektrische als auch optische kabelgebundene Übertragungswege (22) bereitstellt. Weiterhin erlaubt diese Datenübertragung Fehlererkennung und Fehlerkorrektur. Alternativ hierzu können auch andere kabelgebundene Systeme oder auch Freiraumsysteme sowohl als Funksignale als auch als optische Signale eingesetzt werden.

Die Datenübertragung mittels IEEE 1394 erlaubt weiterhin eine Vernetzung mehrerer Komponenten, beispielsweise einer Anfordereinheit (10) mit mehreren Ansteuereinheiten (30) ohne dazu Änderungen am Aufbau der Schaltung der Anfordereinheit (10) durchführen zu müssen (Fig. 4). Hierzu müssen auf der Ansteuereinheit z.B. lediglich zwei digitale Schnittstellen (32) samt deren Ansteuerung (33) vorgesehen werden. Es handelt sich hierbei um eine typische Netzwerkstruktur. Eine Skalierbarkeit des Systems ist somit auf einfachem Wege möglich.

Die gesamte erfinderische Ansteuerung für Leistungshalbleitermodule weist somit wesentliche Vorteile gegenüber dem Stand der Technik auf:
- Erhöhte Funktionssicherheit durch Störsicherheit der Datenübertragung, wie durch die Erzeugung der analogen Signale in der systemspezifischen Ansteuereinheit.
- Einfachere Ausgestaltung der anwendungsspezifischen Anfordereinheit, da dieser nur noch normierte digitale Signale von der Ansteuerung verarbeiten muss, sowie nur noch derartige Signale für die Ansteuereinheit erzeugen muss.
- Fehlertolerante und störsicher digitale Datenübertragung zwischen Anfordereinheit und Ansteuereinheit.
- Möglichkeit der vollständigen galvanischen Trennung zwischen Anfordereinheit und Ansteuereinheit.
- Skalierbarkeit und damit einfache Ausbaumöglichkeit.

## Patentansprüche

1. Ansteuerung für ein oder mehrere Stromrichterventile (37) oder eines oder mehrerer daraus aufgebauter Stromrichter (36) bestehend aus
einer Anfordereinheit (10), ihrerseits bestehend aus mindestens einer digitalen Recheneinheit (11) und mindestens einer damit verbundenen digitalen Schnittstelle (14) samt deren Ansteuerung (15),
mindestens einer digitalen Datenübertragung (22) und
mindestens einer Ansteuereinheit (30), bestehend aus mindesten einer digitalen Schnittstelle (32) samt deren Ansteuerung (33), mindestens einer digitalen Recheneinheit (34) sowie analogen Komponenten (35) zur direkten Ansteuerung der Stromrichterventile (37).

2. Ansteuerung nach Anspruch 1, **dadurch gekennzeichnet, dass**
die digitale Datenübertragung (22) leitungsgebunden elektrisch oder optisch ausgestaltet ist.

3. Ansteuerung nach Anspruch 1, **dadurch gekennzeichnet, dass**
die digitale Datenübertragung (22) im Freiraum, elektrisch oder optisch, ausgestaltet ist.

4. Ansteuerung nach Anspruch 2, **dadurch gekennzeichnet, dass**
die digitale Datenübertragung (22) mittels des Standards IEEE 1394 ausgestaltet ist.

5. Ansteuerung nach Anspruch 1, **dadurch gekennzeichnet, dass**
die Verbindung einer oder mehrerer Anfordereinheiten (10) mit einem oder mehreren Ansteuereinheiten (30) als Netzwerk ausgestaltet ist.
